# EUROPEAN PATENT SPECIFICATION

(11) **EP 2 111 979 B1**
(45) Date of publication and mention of the grant of the patent: **18.01.2012**
(21) Application number: 09158128.0
(22) Date of filing: 17.04.2009
(51) Int. Cl.: B32B 27/00, B65D 65/38, C08J 5/18, C08L 23/08

(54) **Stack sealable heat shrinkable film**
Im Stapel versiegelbare Schrumpffolie
Film thermorétrécissable scellable en superposition

(30) Priority: 21.04.2008 EP 08154894
(43) Date of publication of application: 28.10.2009
(73) Proprietor: Flexopack S.A. Plastics Industry, 19400 Koropi (GR)
(72) Inventor: Gkinosatis, Dimitris, 19400, Koropi Attica (GR)
(74) Representative: Sandmann, Wolfgang

(56) References cited:
- EP-A1- 1 170 332
- EP-A1- 1 415 930
- EP-A2- 0 419 274
- WO-A1-00/26024
- WO-A1-00/32393
- WO-A1-00/37240
- WO-A1-2007/088005
- US-A- 5 547 752
- DATABASE WPI Week 199344 Thomson Scientific, London, GB; AN 1993-348015 XP002592333 & JP 5 254074 A (ASAHI CHEM IND CO LTD) 5 October 1993 (1993-10-05)
- DATABASE WPI Week 200781 Thomson Scientific, London, GB; AN 2007-877086 XP002592334 & JP 2007 216551 A (MITSUBISHI PLASTICS IND LTD) 30 August 2007 (2007-08-30)

## Description

The present invention refers to a multilayer heat shrinkable film characterized by a combination of desirable properties, such as high shrinkage, good optical properties, excellent sealability and stack sealability. The invention further is directed to a method of producing said film. The invention is further directed to the use of said film or bags and pouches made therefrom for packaging goods as for example food products. The invention also refers to tubes made with the film.

Generally, the packaging of food items by means of a heat shrinkable bag comprises the following steps
1. Putting the food item inside the bag and removing the air (vacuumising) with the help of a vacuum device.
2. Sealing of the open end of the bag.
3. Placing the vacuum pack in a heat shrinking media such as hot water under a temperature that ensures the shrink of the pack (e.g. 90°C).
4. The pack is ready and is characterized by appealing appearance and long shelf life because of the absence of oxygen.

These films need high shrink properties and good optics to ensure an excellent appearance and excellent sealability so that there is no entrance of oxygen to the pack as this would be detrimental for the shelf life of the food.

In some cases, where the food is stored in frozen conditions for example, there is the possibility to use a non gas barrier film. The other characteristics remain the same.

Packaging films with the above properties are well known in the art.

A problem that is often found in the art is that during the packaging process the operators must put the food in the bags with extra care, as they must avoid the overlapping of the bags. When overlapped or semi overlapped packs are vacuumized and sealed, the outer surfaces of the two (or more) bags seal the one to the other under the temperature and pressure conditions used to guarantee the sealability of the inner surfaces. This may lead to high rejects and loss of productivity. This situation in particular occurs in stack sealing procedures, i.e. in a situation, wherein two or more products are situated one upon the other and then are sealed.

If the operator tries to modify the temperature, seal time, pressure conditions there is a high possibility that the inner surfaces do not seal sufficiently.

Using bags that can be heat sealed when overlapping occurs, without problems of insufficient seal strength and sealing of the outer surfaces could lead to higher productivity, smaller cycle of each packed product and less attention required by the operator.

The problem to be solved has been addressed in the past:

EP 1131205 refers to the use of a high melting point polyamide in the outer layer. The use of this material has the disadvantage that it reduces the shrinkage of the final film because of the high vicat of this resin. Therefore, this approach is not suitable for heat-shrinkable films and products made thereof.

EP 1060077 refers to the use of a polyester material in the outside layer. This material also has a high vicat and reduces the shrinkage of the multilayer product.

EP 1415930 Al refers to the use of peelable combinations comprising polybutylene in the outer layer. The problem in this case is that there is a high risk of deteriorating the optical properties as the outer layer (which contributes a lot to the optical properties of the combination) consists of the blend of two incompatible polymers able to make a cohesive peel. The outer layer should comprise an easily peelable combination so that stack sealability is easily achieved. The peelable composition is applied by "extrusion, co-extrusion or coating of a substrate".

### SUMMARY OF THE INVENTION

Therefore, the problem underlying the invention is to provide a heat sealable film, which can advantageously be used in stack sealing applications. It is a further problem of the invention to avoid that the outer surfaces of the two (or more) bags in stack sealing applications seal the one to the other under the temperature and pressure conditions used to guarantee the sealability of the inner surfaces. It is a still further problem to provide bags that can be heat sealed when overlapping occurs, without problems of insufficient seal strength and sealing of the outer surfaces. It is an additional problem to provide a film for stack sealing applications which has excellent optical properties.

These problems are overcome by the subject-matter of the independent claims. Preferred embodiments are set forth in the dependent claims.

The inventors have managed to overcome all of these problems by discovering a film combining
1. Excellent overlapping sealability
2. Excellent sealing properties over a big range of machine conditions.
3. Excellent optical properties
4. Manufacturing in a stable and controlled way.

This is achieved by a heat shrinkable film where the outer (outside) layer comprises a blend of ionomer resins and polybutylene homopolymer or copolymer where at least one of the ionomer resins has a wt.-% acid less than 12 and the other more than 12.

### Definitions:

In this application the following definitions are used:

The term "film" refers to a flat or tubular flexible structure of thermoplastic material.

The term "heat shrinkable" refers to a film that shrinks at least 10% in at least one of the longitudinal and transverse directions when heated at 90°C for 4 seconds. The shrinkability is measured according to ASTM 2732.

The phrase "longitudinal direction" or "machine direction" herein abbreviated "MD" refers to a direction along the length of the film.

The phrase "outer layer" refers to the film layer which comes in immediate contact with the outside environment (atmosphere).

The phrase "inner layer" refers to the film layer that comes in direct contact with the product packed. This is also called "sealing layer" as this layer must be hermetically sealed in order to protect the product from ingress of air.

As used herein, the term "homopolymer" refers to a polymer resulting from polymerization of a single monomer.

As used herein, the term "copolymer" refers to a polymer resulting from polymerization of at least two different monomers.

As used herein, the term "polymer" includes both above types.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra low density polyethylene (ULDPE), metallocene catalysed polymers and polyethylene plastomers and elastomers.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The monomer content is less than 40%.

As used herein the phrase "ethylene vinyl acetate copolymer" refers to copolymers of ethylene and vinyl acetate.

As used herein, the term EVOH refers to saponified products of ethylene vinyl ester copolymers. The ethylene content is typically in the range of 25 to 50%.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term polyamide refers to homopolymers and copolymers.

As used herein the term "ionomer" refers particularly to ethylene-acid copolymers which have been neutralized by metals such as sodium, zinc, lithium or others known in the art. The acid used is usually methacrylic or acrylic acid.

As used herein the term "polybutylene" generally refers to butene-1 homopolymers and copolymers. Useful copolymers comprise ethylene mer units. Ethylene content should be generally less than 50%.

All measurement methods mentioned herein are readily available for the skilled person. For example, they can be obtained from the American National Standards Institute at: www.webstore.ansi.org

All percentages used are per weight unless stated otherwise.

### DETAILED DESCRIPTION OF THE INVENTION

According to a first aspect the present invention is directed to a heat shrinkable film having a shrinkage of at least 10%, optionally at least 40%, measured according to ASTM 2732 in water at 90°C in at least one of MD, TD directions, where the outer surface of the film comprises a blend of ionomer resins and polybutylene where one of the ionomer resins has a % acid less than 12 and the other more than 12.

According to a preferred version of the invention, the polybutylene content should be less than 20% in the total blend. A blend with more than 20% polybutylene could lead to deterioration of optical properties.

According to a preferred version, the polybutylene content should be between 5 and 10%.

According to a further preferred version, the ratio between the weight percentages of the two ionomers should be between ½ and 2/1.

In one preferred version, the multilayer film is irradiated. The irradiation may be a beam, gamma radiation, UV radiation or other.

In a preferred embodiment of the invention, said ionomer with an acid content less than 12% by weight is included in said blend in an amount of 5 - 95 wt.-%, preferably in an amount of 10 - 90 wt.-% with respect to the other ionomer. In a further alternative, said ionomer with an acid content of more than 12% by weight is included in said blend in an amount of 5 - 95- wt.-%, preferably in an amount of 10 - 90 wt.-% with respect to the other ionomer.

In a further embodiment, the acid content of said ionomer with an acid content less than 12% by weight is in the range of 5 to 12 wt.-%, preferably 7 to 11 wt.-%. Furthermore optionally the acid content of said ionomer with an acid content of more than 12% by weight is preferably in the range of 12 to 25%, preferably between 13 and 20%.

In one embodiment of the invention, said polybutylene homopolymer or copolymer content is less than 20 wt.-% in the total blend, preferably between 5 and 10 wt.-%.

In one embodiment of the invention, the outer surface layer comprises a blend of components a, b and c as specified in present claim 1 in an amount of 80 wt.-% of the blend composition or more. Further materials, e.g. additives, maybe present but preferably no more than 20 wt.-% of the outer surface layer composition.

In the film according to the present invention, the heat sealing layer may comprise a single polyolefin or a blend of different polyolefins. In a preferred version of the structure, the sealing layer comprises at least one homogeneous polyolefin.

In a further preferred version the sealing layer comprises a homogeneous polyolefin produced with non metallocene catalysts.

In a preferred version of the invention, the multilayer film comprises an oxygen barrier material, preferably PVDC, EVOH, polyamide or polyester.

Between the sealing layer and the oxygen barrier layer, a tie layer could be used. Preferred materials for this tie layer may be ethylene ester copolymers, such as ethylene vinyl acetate copolymers, ethylene methyl acrylate copolymers and other materials well known in the art. A preferred version might include maleic anhydrite modified ethylene ester copolymers or maleic anhydrite modified LLDPE. Commercial trademarks are for example BYNEL from Dupont and ADMER from Mitsui.

Between the outer and the barrier layer there may be another layer incorporating a tie layer. Preferred materials for this tie layer may be ethylene ester copolymers, such as ethylene vinyl acetate copolymers, ethylene methyl acrylate copolymers and other materials well known in the art. A preferred version might include maleic anhydrite modified ethylene ester copolymers or maleic anhydrite modified LLDPE. Commercial trademarks are for example BYNEL from Dupont and ADMER from Mitsui.

Any of the layers described above may also include additives well known in the art such as slip agents, antiblock, polymer processing aids, antistatic, antifog, acid scavengers, odour scavengers and the like. A person skilled in the art may select the right additives according to any particular needs.

According to a further aspect, the present invention discloses a bag or pouch comprising a film according to the present invention.

In a further aspect, the invention is directed to the use of the films or the bag or pouch of the invention for packaging food. For example, the food item is putted inside the bag and the air is removed (vacuumising) with the help of a vacuum device. Subsequently, the open end of the bag is sealed and the vacuum pack is placed in a heat shrinking media such as hot water under a temperature that ensures the shrink of the pack (eg 90°C). The pack than is ready and is characterized by appealing appearance and long shelf life because of the absence of oxygen.

The present invention is now described by the following Examples:

### EXAMPLES

A 5 layer film is produced in a double bubble (the double bubble method is described in US 3,456,044) commercial line with the following recipe
Inner (sealing layer), 85% P1+ 10% P2+ 5% ADDITIVES
Adjacent layer 93% E1+ 7% ADDITIVES
Barrier layer PVDC commercial grade
Adjacent layer 30% M1+ 65% E2+ 5% ADDITIVES
Outer layer 43% 11+ 43% 12+10% PB-E + 4% ADDITIVES
See table 1

The thickness of the structure is 22/13/4/9/7 starting from the inner and going to the outer layer.

As comparison, tests were done with outer layers which comprised
90% 11+10% PB-E
90% I2 + 10% PB-E

In these two cases, the multilayer film could not be efficiently stretched. Production was interrupted due to bubble breakages.

**TABLE 1**

| Type | Description | Manufacturer | Melt Index g/10 min | Density g/cm³ | Melting point °C. |
|---|---|---|---|---|---|
| E1 | EVA | Dupont 3135 X | 0.35 | 0.93 | 95 |
| E2 | EVA | Dupont 3165 | 0.7 | 0.94 | 89 |
| P1 | LLDPE | Dow | | 0.916 | |
| PB-E | Butene ethylene copolymer | Basell | | 0.908 | |
| M1 | EMA copolymer | Atofina LOTRYL 29MAO3 | 2-3,5 | 0,95 | 61 |
| P2 | Plastomer | MITSUI | 1 | 0,885 | |
| I1 | Ionomer with acid content 10% | DUPONT | 1.3 | 0.94 | |
| I2 | Ionomer with acid content 15% | DUPONT | 0.9 | 0.94 | |

### Tests

1. Haze measurement. The haze measurement was done according to ASTM D 1003.
2. Gloss measurement. This was done according to BS 2782.
3. Shrinkage measurement done according to ASTM 2732 at 90C.
4. Sealing window.

This final test was done on a Bosch vacuum sealing machine (type GM2002). We put one piece of the tube of each material on another so that there is an overlap area. We seal this area and then we pull. The material is thought to be OK if the outer surfaces are easily pulled without any delamination or resistance and the inner(sealing layers) are at the same time strongly sealed. Different sealing times were applied in order to see which of the three materials has a more extended operating window.

The results are displayed on table 2

**TABLE 2**

| | HAZE | GLOSS | SHRINKAGE(MD/TD) | STACK SEAL WINDOW (sealing times) |
|---|---|---|---|---|
| Inventive material | 12 | 90 | 45/49 | 4-10 |

## Claims

1. A heat shrinkable multilayer film, wherein the outer surface layer of the film comprises a blend of
a. a ionomer with an acid content less than 12% by weight;
b. a ionomer with an acid content more than 12% by weight;
c. a polybutylene homopolymer or copolymer.

2. The film of claim 1, wherein the film comprises a high oxygen barrier layer.

3. The film of claim 1 or claim 2, wherein said ionomer with an acid content less than 12% by weight is included in said blend in an amount of 5 - 95 wt.-%, preferably in an amount of 10 - 90 wt.-% with respect to the other ionomer.

4. The film of claim 1 or claim 2, wherein said ionomer with an acid content of more than 12% by weight is included in said blend in an amount of 5 - 95 wt.-%, preferably in an amount of 10 - 90 wt.-% with respect to the other ionomer.

5. The film of one or more of the preceding claims, wherein the acid content of said ionomer with an acid content less than 12% by weight is in the range of 5 to 12 wt.-%, preferably 7 to 11 wt.-%.

6. The film of one or more of the preceding claims, wherein the acid content of said ionomer with an acid content of more than 12% by weight is preferably in the range of 12 to 25%, preferably between 13 and 20%.

7. The film of one or more of the preceding claims wherein the weight percent ratio of the two ionomers is between 1/2 and 2/1.

8. The film of one or more of the preceding claims, wherein said polybutylene homopolymer or copolymer content is less than 20 wt.-% in the total blend, preferably between 5 and 10 wt.-%.

9. The film of one or more of the preceding claims, wherein said ionomers are ethylene-acid copolymers, and wherein the acid is preferably methacrylic or acrylic acid or a combination thereof.

10. The film of one or more of the preceding claims, wherein the film comprises a high oxygen barrier layer, a sealing layer and optionally a tie layer, further optionally wherein a tie layer is included between the outer layer and the high oxygen barrier layer.

11. A film of one or more of the preceding claims, wherein the film has a shrinkage of at least 10% measured according to ASTM 2732 in water at 90°C for four seconds in at least one of MD, TD directions, optionally wherein the heat shrinkage at 90°C in water for four seconds in at least one of MD, TD directions according to ASTM 2732 is at least 40%.

12. A method of producing a film according to one or more of the preceding claims wherein said film is produced by the double bubble method.

13. A bag, tube or pouch or any other packaging material, particularly for food products, comprising a film according to one or more of the preceding claims.

## Patentansprüche

1. Wärmeschrumpfbare Mehrschichtfolie, wobei die äußere Oberflächenschicht der Folie eine Mischung von
a. einem Ionomer mit einem Säuregehalt von weniger als 12 Gew.-%;
b. einem Ionomer mit einem Säuregehalt von mehr als 12 Gew.-%;
c. einem Polybutylen-Homopolymer oder -Copolymer umfasst.

2. Folie gemäß Anspruch 1, wobei die Folie eine hohe Sauerstoffbarriereschicht umfasst.

3. Folie gemäß Anspruch 1 oder Anspruch 2, wobei das Ionomer mit einem Säuregehalt von weniger als 12 Gew.-% in der Mischung in einer Menge von 5 bis 95 Gew.%, bevorzugt in einer Menge von 10 bis 90 Gew.-% in Bezug auf das andere Ionomer enthalten ist.

4. Folie gemäß Anspruch 1 oder Anspruch 2, wobei das Ionomer mit einem Säuregehalt von mehr als 12 Gew.-% in der Mischung in einer Menge von 5 bis 95 Gew.%, bevorzugt in einer Menge von 10 bis 90 Gew.-% in Bezug auf das andere Ionomer enthalten ist.

5. Folie gemäß einem oder mehrerer der vorangehenden Ansprüche, wobei der Säuregehalt des Ionomers mit einem Säuregehalt von weniger als 12 Gew.-% im Bereich von 5 bis 12 Gew.-%, bevorzugt 7 bis 11 Gew.-% ist.

6. Folie gemäß einem oder mehrerer der vorangehenden Ansprüche, wobei der Säuregehalt des Ionomers mit einem Säuregehalt von mehr als 12 Gew.-% bevorzugt im Bereich von 12 bis 25 %, bevorzugt zwischen 13 und 20 % ist.

7. Folie gemäß einem oder mehrerer der vorangehenden Ansprüche, wobei das Gewichtsprozent-Verhältnis der zwei Ionomeren zwischen 1/2 und 2/1 ist.

8. Folie gemäß einem oder mehrerer der vorangehenden Ansprüche, wobei der Gehalt des Polybutylen-Homopolymers oder -Copolymers weniger als 20 Gew.-% in der gesamten Mischung, bevorzugt zwischen 5 und 10 Gewichtsprozent ist.

9. Folie gemäß einem oder mehrerer der vorangehenden Ansprüche, wobei die Ionomere Ethylen-Säure-Copolymere sind, und wobei die Säure bevorzugt Methacrylsäure oder Acrylsäure oder eine Kombaniation davon ist.

10. Folie gemäß einem oder mehrerer der vorangehenden Ansprüche, wobei die Folie eine hohe Sauerstoffbarriereschicht, eine Siegelschicht und gegebenenfalls eine Haftvermittlerschicht umfasst, wobei weiter gegebenenfalls eine Haftvermittlerschicht zwischen der äußeren Schicht und der hohen Sauerstoffbarriereschicht beinhaltet ist.

11. Folie gemäß einem oder mehrerer der vorangehenden Ansprüche, wobei die Folie eine Schrumpfung von zumindest 10 % gemessen gemäß ASTM 2732 in Wasser bei 90°C für 4 Sekunden in zumindest einer der Längs- ("MD"), Quer- ("TD") Richtungen hat, gegebenenfalls wobei die Wärmeschrumpfung bei 90°C in Wasser für 4 Sekunden in zumindest einer der Längs-, Quer-Richtungen gemäß ASTM 2732 zumindest 40 % ist.

12. Verfahren zur Herstellung einer Folie gemäß einem oder mehrerer der vorangehenden Ansprüche, wobei die Folie durch die doppelte Blasenmethode ("double bubble method") hergestellt wird.

13. Tasche, Schlauch oder Beutel oder irgendein weiteres Verpackungsmaterial, insbesondere für Nahrungsmittelprodukte, umfassend eine Folie gemäß einem oder mehrerer der vorangehenden Ansprüche.

## Revendications

1. Film multicouche thermorétrécissable, dans lequel la couche de surface extérieure du film comprend un mélange de
a. un ionomère avec une teneur en acide inférieure à 12 % en poids ;
b. un ionomère avec une teneur en acide supérieure à 12 % en poids ;
c. un homopolymère ou un copolymère de polybutylène.

2. Film selon la revendication 1, dans lequel le film comprend une haute couche barrière contre l'oxygène.

3. Film selon la revendication 1 ou 2, dans lequel ledit ionomère avec une teneur en acide inférieure à 12 % en poids est compris dans ledit mélange dans une quantité de 5 à 95 % en poids, préférentiellement dans une quantité de 10 à 90 % en poids par rapport à l'autre ionomère.

4. Film selon la revendication 1 ou 2, dans lequel ledit ionomère avec une teneur en acide supérieure à 12 % en poids est compris dans ledit mélange dans une quantité de 5 à 95 % en poids, préférentiellement dans une quantité de 10 à 90 % en poids par rapport à l'autre ionomère.

5. Film selon l'une ou plusieurs des revendications précédentes, dans lequel la teneur en acide dudit ionomère avec une teneur en acide inférieure à 12 % en poids est située entre 5 et 12 % en poids, préférentiellement entre 7 et 11 % en poids.

6. Film selon l'une ou plusieurs des revendications précédentes, dans lequel la teneur en acide dudit ionomère avec une teneur en acide supérieure à 12 % en poids est située préférentiellement entre 12 et 25 % en poids, préférentiellement entre 13 et 20 %.

7. Film selon l'une ou plusieurs des revendications précédentes, dans lequel le rapport de pourcentage en poids des deux ionomères est situé entre 1/2 et 2/1.

8. Film selon l'une ou plusieurs des revendications précédentes, dans lequel ladite teneur en homopolymère ou copolymère de polybutylène est inférieure à 20 % en poids du mélange total, préférentiellement entre 5 et 10 % en poids.

9. Film selon l'une ou plusieurs des revendications précédentes, dans lequel lesdits ionomères sont des copolymères d'acide éthylénique, et dans lequel l'acide est préférentiellement un acide méthacrylique ou acrylique ou une combinaison desdits acides.

10. Film selon l'une ou plusieurs des revendications précédentes, dans lequel le film comprend une haute couche barrière contre l'oxygène, une couche de scellage et en option une couche de liaison, en outre de manière optionnelle dans lequel une couche de liaison est comprise entre la couche extérieure et la haute couche barrière contre l'oxygène.

11. Film selon l'une ou plusieurs des revendications précédentes, dans lequel le film a un rétrécissement d'au moins 10 % mesuré selon ASTM 2732 dans l'eau à 90°C en quatre secondes dans au moins un des sens machine, sens transversal, de manière optionnelle dans lequel le rétrécissement thermique à 90°C dans l'eau en quatre secondes dans au moins un des sens machine, sens transversal selon ASTM 2732 est d'au moins 40 %.

12. Procédé de fabrication d'un film selon l'une ou plusieurs des revendications précédentes, dans lequel ledit film est produit par le procédé de double bulle.

13. Sac, tube ou poche ou tout matériel quelconque d'emballage, destiné en particulier aux denrées alimentaires, comprenant un film selon l'une ou plusieurs des revendications précédentes.
